# EUROPEAN PATENT APPLICATION

(11) **EP 4 848 663 A1**
(43) Date of publication of application: **02.12.2026**
(21) Application number: 26181526.0
(22) Date of filing: 28.05.2026
(51) Int. Cl.: H04L 9/40

(54) **INTRUSION DETECTION IN INDUSTRIAL NETWORKS**

(30) Priority: 30.05.2025 US 202519223042
(71) Applicant: Honeywell International Inc., Charlotte, NC 28202 (US)
(72) Inventor: KHITROV, Alexey (Eli), Charlotte, 28202 (US); ENGELHART, Adam, Charlotte, 28202 (US)
(74) Representative: Haseltine Lake Kempner LLP

(57) **Abstract**

Example techniques for determining protocols associated with data packets are described. A mirror stream of traffic data is received from a switch of a local network. The traffic data includes data packets, and each data packet includes an attribute indicative of protocol associated with the data packet. Attribute of the data packets received within a configurable time window are sequentially compared against identification function of protocols in a list of protocols to identify matches. A frequency of occurrence for each identified protocol is determined over the configurable time window. The list of protocols is then reordered based on this frequency, placing the most frequent protocols first. The reordered list is subsequently used for identifying protocol of data packets received after the configurable time window expires, until the next reordering is triggered.

## Description

### BACKGROUND

Industrial automation involves using advanced technologies, machinery, and control systems, such as robots, sensors, programmable logic controllers (PLCs), or the like, to perform tasks and manage processes in industrial environments. Industrial automation reduces the need for human intervention, improves production speed, enhances accuracy, and optimizes overall efficiency. Industries like manufacturing, energy, transportation, utilities, etc., rely on the industrial automation to maintain high-volume, high-precision operations, making industrial automation systems essential for modern industrial workflows.

An industrial network serves as a communication backbone of an industrial automation system, connecting devices like sensors, controllers, and human-machine interfaces (HMIs) to enable seamless data exchange. These industrial networks facilitate real-time monitoring and control of machinery, allowing operators to manage processes remotely, collect performance data, and make critical adjustments, for example, in accordance with standard operating procedures (SOPs), to optimize operations. For example, in a smart factory, sensors on a conveyor belt detect product positions and send real-time data to PLCs, which may then instruct robotic arms to perform specific tasks, like picking, assembling, or packaging. This constant flow of information allows automation systems to operate efficiently, adjust to changing conditions, and maintain optimal performance without human intervention.

Various communications protocols, such as Modbus, PROFINET, EtherNet/IP, or the like, are commonly used to structure and manage communication across devices over the industrial network, ensuring precise coordination within the industrial environments.

While industrial automation brings significant benefits, it also introduces cybersecurity risks. The interconnectivity of devices and systems means that a single compromised entry point may allow attackers access to industrial infrastructure. Threats such as ransomware, data manipulation, or unauthorized control of industrial equipment may cause severe operational disruptions, safety incidents, or financial losses. Unlike traditional information technology environments, industrial systems prioritize uptime and safety, which may make it harder to apply typical security measures without affecting production.

To defend against evolving cyber threats, intrusion detection systems (IDS) have become essential components of industrial cybersecurity. An IDS may passively monitor traffic in the industrial networks, analysing data packets for signs of suspicious activity or known attack patterns. By continuously inspecting traffic flows, the IDS may identify potential breaches before they cause harm, providing security teams with an opportunity to respond and contain threats early. As industrial networks grow more complex and interconnected, the role of the IDS becomes increasingly vital, serving as a crucial layer of defence to ensure the security, stability, and resilience of the industrial automation systems.

### SUMMARY

The details of some embodiments of the invention described in this specification are set forth in the accompanying drawings and the description below. Other features, aspects, and advantages of the invention will become apparent from the description, the drawings, and the claims.

The present subject matter relates to methods, systems, and non-transitory computer-readable media for identification of protocols in a local network.

In accordance with an embodiment of the present subject matter, an intrusion detection system (IDS) is provided that identifies the protocols in the local network. The IDS includes a communication module. The communication module is to obtain, from a switch of the local network, a mirror stream of data traffic associated with nodes of the local network. The data traffic includes a plurality of data packets, each comprising an attribute indicative of a protocol associated with the respective data packets. The IDS further includes a protocol identification module. The protocol identification module is to sequentially compare, the attribute of each of the plurality of data packets, received within a configurable time window, against one or more identification functions of each of a plurality of protocols that are arranged in predefined order in a list. This comparison is done to identify a protocol in the list that matches the protocol associated with the respective data packets. Furthermore, the IDS includes a reordering module that is to determine a prevalence of the protocol associated with each of the plurality of data packets in the local network that are received over the configurable time window. The prevalence indicates a frequency of occurrence of each protocol across the plurality of data packets. The reordering module is to further reorder the protocols in the list based on the determined prevalence. In a reordered list, a protocol having highest prevalence is to be positioned first in order and remaining protocols are to be positioned in decreasing order of prevalence. The reordered list is to be applied for identification of protocols associated with data packets received after the configurable time window expires and until a next reordering of the protocols on the list.

In accordance with another aspect of the present invention, a method of protocol identification includes receiving a mirror stream of traffic data from a switch of a local network. The traffic data includes a plurality of data packets. Each data packet includes an attribute indicative of a protocol associated with the data packet. The method further includes accessing a list of protocols that includes a plurality of protocols arranged in a predefined order. Each protocol in list has an associated identification function. Furthermore, the method includes receiving an indication of a start time corresponding to a configurable time window. The method further includes sequentially comparing the attribute of each of the plurality of data packets received subsequent to the start time against the identification function of each protocol in the list to identify a protocol in the list that matches the protocol associated with each of the respective data packets. Furthermore, the method includes tracking frequency of occurrence for each identified protocol during the configurable time window. The method further includes determining a stop time corresponding to expiry of the configurable time window and triggering reordering of the protocols in the list in response to expiry of the configurable time window. The reordering is based on the frequency of occurrence for each protocol, with protocols occurring more frequently positioned earlier in a reordered list. The method further includes publishing the reordered list for use by an intrusion detection system for subsequent protocol identification.

In accordance with an embodiment of the present invention, a non-transitory computer-readable medium contains instructions that enable a processing resource to receive, from a switch of a local network, a mirror stream of traffic data associated with nodes of the local network. The traffic data includes a plurality of data packets, each comprising an attribute indicative of a protocol associated with the respective data packets. The instructions further cause the processing resource to access a list of protocols that includes a plurality of protocols arranged in an order. Each protocol in the list is associated with one or more identification functions. Each identification function is to be used to determine whether a protocol corresponding to the identification function matches the protocol associated with the respective data packets. Furthermore, the instructions cause the processing resource to receive an indication of a start time corresponding to a configurable time window. The instructions further cause the processing resource to sequentially compare the attribute of each of the plurality of data packets, received within the configurable time window, against the one or more identification functions of each protocol in the list, to identify a protocol in the list that matches the protocol associated with the respective data packets. The instructions cause the processing resource to determine a prevalence of the protocol associated with each of the plurality of data packets in the local network received over the configurable time window. The prevalence indicates a frequency of occurrence of each protocol across the plurality of data packets. The instructions further cause the processing resource to determine a stop time corresponding to expiry of the configurable time window. Furthermore, the instructions cause the processing resource to, in response to expiry of the configurable time window, reorder the protocols in the list based on the determined prevalence, with a protocol having highest prevalence being positioned first in order and remaining protocols positioned in decreasing order of prevalence. The instructions further cause the processing resource to apply the reordered list for identification of protocols associated with data packets received after the configurable time window and until a next reordering of the list.

Thus, by reordering the protocols in the list of protocols based on the prevalence of the protocols in the local network, the present subject matter prioritizes the most commonly occurring protocols. By applying the reordered list to determine the protocols associated with the data packets received after the configurable time period, the present subject matter ensures that the most prevalent protocols are checked first. This reduces the average time needed to identify protocols for new data packets, as the IDS is more likely to find a match earlier in the reordered list. As a result, the overall performance of the IDS may be improved, enabling faster response times to potential security threats.

Additional features and advantages are realized through the concepts of the present subject matter, including the reordering of the protocols in the list of protocols based on their prevalence in the local network. These improvements minimize manual intervention, optimize resource utilization, and enable faster response times for intrusion detection. Other embodiments and aspects of the present subject matter are described in detail herein and are considered a part of the claimed present subject matter.

### BRIEF DESCRIPTION OF FIGURES

The following detailed description references the drawings, wherein:
Fig. 1 illustrates a network environment for implementing example techniques for identifying protocols associated with data packets of a local network of an industrial facility, in accordance with an example implementation of the present subject matter;
Fig. 2 illustrates a block diagram of an intrusion detection system (IDS), in accordance with an example implementation of the present subject matter;
Fig. 3 illustrates the IDS, in accordance with another example implementation of the present subject matter;
Fig. 4 illustrates a chart depicting reordering of protocols in a list of protocols based on frequency of occurrence of protocols associated with each of a plurality of data packets in a local network, in accordance with another example implementation of the present subject matter;
Figs. 5A and 5B illustrates a method of protocol identification, in accordance with an example implementation of the present subject matter;
Fig. 6 illustrates a method for determining prevalence of protocols associated with data packets received within a configurable time window, in accordance with an example implementation of the present subject matter;
Fig. 7 illustrates a method for triggering execution of a workflow to reorder a currently applied list of protocols, in accordance with an example implementation of the present subject matter;
Fig. 8 illustrates a method for reordering protocols in a list of protocols based on change of distribution of protocol of data packets in a local network, in accordance with an example implementation of the present subject matter; and
Fig. 9 illustrates a computing environment for protocol identification, in accordance with an example implementation of the present subject matter.

The detailed description is provided with reference to the accompanying figures. In the figures, the left-most digit(s) of a reference number identifies the figure in which the reference number first appears. The same numbers are used throughout the drawings to reference like features and components.

### DETAILED DESCRIPTION

Industrial automation involves the use of technology, machinery, and control systems to perform industrial operations with minimal human intervention. Industrial automation systems are widely used in sectors such as manufacturing, energy, transportation, utilities, or the like, where they drive efficiency and precision. Communication between components in an industrial automation system is enabled by an industrial network. The industrial network may be understood as a specialized infrastructure that links various nodes connected to the industrial network with each other, allowing them to exchange data and operate as part of a larger industrial automation system. Herein, the node may be understood as any device, sensor, actuator, controller, or equipment that may be connected to the industrial network and participates in the automation process. The nodes , for example, may include programmable logic controllers (PLCs), human-machine interfaces (HMIs), industrial computers, robotic systems, smart sensors, motor drives, and various other industrial devices. Each node typically has a unique address on the network and may communicate using specific industrial protocols designed for real-time control and data acquisition in industrial environments. Each node contributes to the industrial automation workflow by sharing real-time information and coordinating responses across the industrial automation system.

Each node within an industrial network plays a role in the overall operation of an industrial automation system. For example, a temperature sensor may regularly send readings to a programmable logic controller, which then adjusts equipment settings to maintain optimal conditions. This communication occurs through data packets which are small units of information containing details such as source and destination addresses, protocol headers, and payload data. Because industrial networks handle vast amounts of traffic, with nodes constantly exchanging data packets to coordinate real time operations, the industrial networks generate high throughput. This creates an environment where large volumes of traffic is required to be handled and processed rapidly to prevent operational disruptions.

However, the same interconnectedness that makes the industrial automation so effective also introduces cybersecurity risks. The industrial networks are attractive targets for attackers, as compromising even a single node may have severe consequences. For example, an attacker who gains access to a programmable logic controller may send malicious commands to disable safety mechanisms, disrupt production lines, or cause equipment malfunctions, leading to physical damage and financial loss. To counter these threats, intrusion detection systems (IDSs) are widely used in industrial facilities. Modern IDSs have become critical components of industrial cybersecurity, monitoring network traffic, detecting suspicious activity, and alerting security teams to potential breaches.

An IDS passively monitors network traffic by inspecting a mirrored stream, which is a duplicated copy of live traffic sent by network switches. This allows the IDS to analyze data packets without interfering with real time operations. The IDS scans each data packet to determine whether content of the data packet matches known attack patterns or deviates from normal behavior. For example, if a node that typically sends temperature data suddenly starts transmitting large amounts of unexpected commands, the IDS may flag this as suspicious activity, prompting security personnel to investigate further.

To understand the content of the data packet, the IDS may need first identify communication protocol being used. Protocols define the rules and formats for data exchange between the nodes, and each protocol is tailored to specific tasks. For example, Modbus protocol is commonly used to read data from sensors, while the simple network management protocol (SNMP) helps manage network devices such as switches and routers. Accurately identifying the protocol associated with a data packet is essential because the identification of the protocol enables the IDS to apply deep packet inspection (DPI), parsing the data packet contents to determine whether the commands or data being exchanged are legitimate or potentially harmful.

The IDS may match each data packet to a protocol by comparing attributes, such as port numbers, headers, and unique byte sequences known as magic numbers, of the data packet against a list of protocols that are supported by the IDS. For example, if a data packet is sent to port 502, the IDS may infer Modbus to be the underlying protocol and then check for additional Modbus specific markers to confirm a match. Once a match is found, the IDS may dissect the data packet and analyze payload of the data packet. If a Modbus packet, for example, contains a command to shut down a device outside of regular maintenance hours, the IDS may raise an alert, allowing operators to block the malicious packet and investigate the source of the attack.

Despite their importance, conventional IDSs face significant challenges in high traffic industrial environments. One of the biggest issues lies in the protocol identification process, which may become a bottleneck. Industrial networks generate hundreds or even thousands of data packets per second, and the IDS may be required to match each data packet to a protocol before the data packet may be analyzed. If the list of protocols that is supported by the IDS is long, the IDS may need to check multiple protocols before finding a match or determining that no match exists at all.

This inefficiency is exacerbated by the fact that not all protocols are present in every industrial network. An IDS may support fifty different protocols, but a given industrial network may only use a subset of them. For example, if an industrial network is implemented in a building automation system, the relevant protocols may be BACnet, Modbus, and SNMP. If BACnet is a fifteenth protocol in the list of protocols, Modbus is twentieth, and SNMP is fiftieth, the IDS may need to perform fifteen checks for each BACnet data packet, twenty checks for each Modbus data packet, and fifty checks for each data SNMP data packet. These unnecessary checks waste valuable processing time. In high throughput networks, such delays may cause data packets to be dropped, creating security gaps that attackers may exploit. For example, if an attacker floods the industrial network with SNMP data packets in an attempt to reconfigure critical devices, and SNMP is the last protocol in the list, the IDS may be unable to match and inspect each data packet before new ones arrive, leading to data packet loss. If a malicious data packet slips through undetected, the attacker may alter device settings, disable alarms, or redirect traffic, without the IDS detecting the intrusion in time.

The inefficiency of the conventional IDSs is often due to their use of a list of protocols that is static in nature, meaning the order of protocols in the list of protocols remains fixed regardless of changes in network traffic patterns or protocol usage. While some of the conventional IDSs include list of protocols that may be tailored to specific industries, these tailored lists are typically not optimized for individual network environments. For example, a water treatment plant may primarily use Modbus protocol, but the IDS may still check for protocols that are less relevant to that specific environment, thereby slowing down the protocol identification process.

Furthermore, the industrial networks are dynamic environments where the nodes and the protocols evolve over time. New equipments may introduce new protocols, while legacy devices may use outdated protocols that are less relevant. The conventional IDSs often lack the flexibility to adapt to these changing network conditions. This inability to dynamically optimize the protocol identification process impedes efficient processing of incoming data packets, potentially leading to increased packet loss and undetected threats.

Some of the conventional IDSs attempt to address this issue by placing rarely used protocols at the bottom of the list of protocols. However, this approach has two main limitations. First, the list remains static, unable to adapt to short-term changes in network traffic patterns. Second, the ordering is not based on real-time protocol prevalence within the specific network being monitored. As a result, even these modified lists may not effectively optimize protocol identification for the unique characteristics of individual industrial networks.

Therefore, there is a need for a new technique that may optimize protocol identification within the IDS to better suit the unique characteristics of the industrial networks, reducing unnecessary identification checks and accelerating data packet processing.

To this end, the present subject matter describes techniques for optimizing the process of identifying the protocol associated with an incoming data packet by an intrusion detection system (IDS) such that the time taken to determine the protocol is minimized. By reordering a list of protocols that is supported by the IDS based on prevalence of the protocols in a network, the IDS may prioritize the most frequently occurring protocols, reducing the number of comparisons required before a match is found. This optimization improves the efficiency of protocol identification, enabling faster data packet analysis, reducing processing delays, and minimizing the risk of data packet loss. As a result, the overall performance of the IDS may be enhanced, leading to more effective network monitoring, quicker threat detection, and improved cybersecurity in industrial environments.

The present subject matter includes obtaining, from a switch of a network, a mirror stream of data traffic associated with nodes of the network. The mirror stream is received at the IDS. In an example, the data traffic includes a plurality of data packets, where each data packet includes an attribute indicative of a protocol associated with the respective data packet.

In an example, for each data packet received within a configurable time period, the attribute of the data packet is sequentially compared by the IDS with one or more identification functions of each protocol in a list of protocols. This process continues until a protocol in the list is identified as matching the protocol associated with the data packet. Based on identification of protocols associated with these packets received during the configurable time period, a prevalence of the protocols is determined by the IDS. The prevalence may indicate the frequency of occurrence of each protocol across the plurality of data packets. The configurable time period serves as a reference time span that may suffice for determination of the prevalence. In an example, the time period may be configurable based on user input and may vary between different industrial networks.

In an example, once the prevalence of the protocol associated with each of the plurality of data packets in the network is determined, the IDS reorders the protocols in the list based on the determined prevalence. The reordering includes positioning the protocol with the highest prevalence first in the order and arranging the remaining protocols in decreasing order of prevalence. A reordered list of protocols is then applied by the IDS for identification of protocols in relation to data packets received after the configurable time period lapses and remains in use until the next reordering of the list. For example, if over the configurable time period, it is determined that Modbus is the most frequently occurring protocol, followed by building automation and control network (BACnet) and then simple network management protocol (SNMP), the IDS may reorder the protocols in the list such that Modbus is positioned first, BACnet second, and SNMP third. When new data packets arrive after expiry of the configurable time period, the reordered list is used for protocol identification, ensuring that the most frequently occurring protocols are checked first. This reduces the number of comparisons needed before identifying a match, thereby improving the efficiency of protocol detection, and minimizing processing delays.

Accordingly, the present subject matter allows for more efficient protocol identification in network traffic analysis. By reordering the list of protocols based on their prevalence in the network, the present subject matter may prioritize the most commonly occurring protocols. Thus, the IDS may ensure that the most prevalent protocols are checked first. This reduces the average time needed to identify protocols for incoming packets, as the IDS is more likely to find a match earlier in the reordered list of protocols. As a result, the overall performance of the IDS may be significantly improved, enabling faster response times to potential security threats and more effective network management.

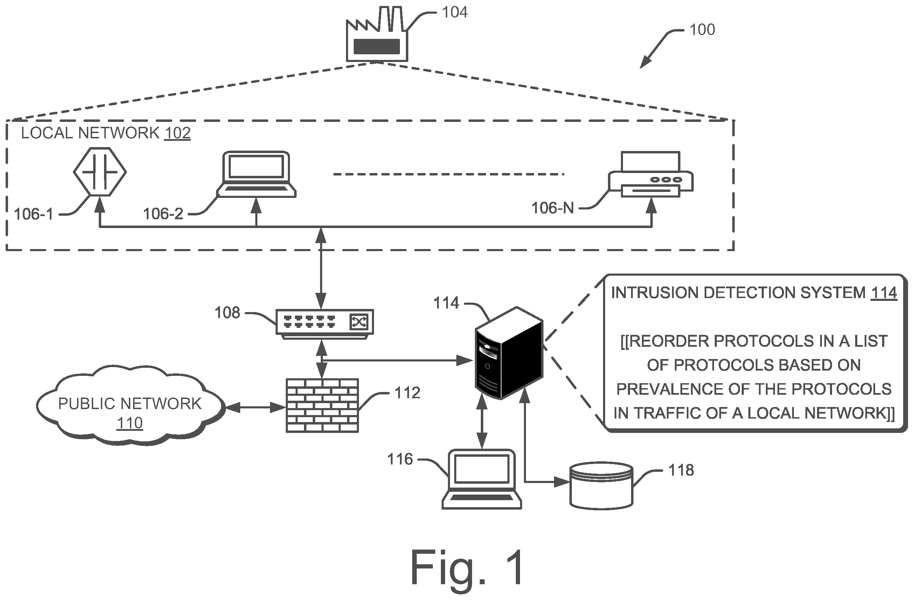

The above techniques are further described with reference to Fig. 1 to Fig. 9. It should be noted that the description and the Figures merely illustrate the principles of the present invention along with examples described herein and should not be construed as a limitation to the present invention. It is thus understood that various arrangements may be devised that, although not explicitly described or shown herein, embody the principles of the present invention. Moreover, all statements herein reciting principles, aspects, and implementations of the present invention, as well as specific examples thereof, are intended to encompass equivalents thereof.

Fig. 1 illustrates a network environment 100 for implementing examples techniques to identify protocols associated with data packets of a communication network of an industrial facility, in accordance with an example implementation of the present subject matter.

In accordance with an embodiment of the present subject matter, the communication network may be corresponds to a local network 102 implemented within the industrial facility, such as a facility 104, to support communication, data processing, and connectivity between various computing resources. In an example, the local network 102 may be a local area network (LAN), a wide area network (WAN), a metropolitan area network (MAN), or a campus area network (CAN), depending on the size and geographical spread of the facility 104. In an example, the local network 102 may also be implemented as a virtual local area network (VLAN) for logical segmentation of network resources. In some examples, the local network 102 may be a combination of these network types, integrated to meet specific organizational needs. The local network 102 provides connectivity, enabling stakeholders, automated systems, and connected devices to exchange data, perform computations, and access services without relying on external networks.

Within the facility 104, a plurality of nodes 106-1, 106-2, ..., and 106-N may be deployed to support a range of operational needs. In an example, the nodes 106-1, 106-2, ..., and 106-N may be computing devices that are interconnected within the local network 102 to facilitate communication and data exchange. These nodes 106-1, 106-2, ..., and 106-N may vary in function and complexity depending on requirements of the facility 104. In an example, the nodes 106-1, 106-2, ..., and 106-N may comprise servers that host applications, databases, and cloud-based services, workstations, Internet of Things (IoT) devices, or the like, that may facilitate automation and remote monitoring, and other networked hardware such as printers, storage systems, and industrial control units. The nodes 106-1, 106-2, ..., and 106-N collectively contribute to overall functionality of the facility 104 by ensuring data processing, secure storage, and real-time operational control. For example, node 106-1 may be a server hosting databases and applications. Similarly, node 106-2 may be a workstation useable by a control room operator. Likewise, node 106-N may represent an IoT device, such as a smart thermostat controlling climate or a security camera monitoring entrances and exits of the facility 104.

In an embodiment, the network environment 100 may include one or more switches, such as a switch 108. The switch 108 may be understood as a networking device that connects multiple devices on a computer network, for example, by using data packet switching to receive, process, and forward data to a destination device. In accordance with an embodiment of the present subject matter, the switch 108 may connect the nodes 106-1, 106-2, ..., and 106-N on the local network 102, to enable the nodes 106-1, 106-2, ..., and 106-N to communicate by forwarding data packets, from example, based on their destination MAC addresses. For example, when a user at node 106-2 needs to access customer data stored on a server at node 106-1, the switch 108 may route this request and subsequent data transfer.

In an embodiment, the switch 108 may also be connected to a public network 110 to facilitate communication between the local network 102 and external resources, such as cloud storage services, software-as-a-service (SaaS) platforms, content delivery networks (CDNs), and partner organization networks. This connection may allow authorized nodes, such as the nodes 106-1, 106-2, ..., and 106-N, within the local network 102 to access internet-based services, cloud applications, or remote resources.

In an embodiment, the public network 110 may be a single network or a combination of multiple networks and may use a variety of different communication protocols. In an example, the public network 110 may be a wireless or a wired network, or a combination thereof. Examples of such individual networks include, but are not limited to, the Internet, cellular networks, such as Global System for Mobile Communication (GSM) network, Universal Mobile Telecommunications System (UMTS) network, Long-Term Evolution (LTE) network), Wi-Fi networks, satellite networks, and fibre-optic networks. In an example, the public network 110 may also encompass various backbone networks and internet exchange points that facilitate global data transmission. Depending on the technology, the public network 110 may include various network entities, such as internet service providers (ISPs), content delivery networks (CDNs), domain name servers (DNS), gateways, and routers; however, such details have been omitted for the sake of brevity of the present description.

To control operation of the nodes 106-1, 106-2, ..., and 106-N, organizations may implement various standard operating procedures (SOPs). These SOPs may include protocols for data access, user authentication, network segmentation, traffic prioritization, and the like. In some examples, the SOPs may also cover incident response procedures, regular security audits, and guidelines for software updates and patch management. For example, an SOP for data access may require multi-factor authentication for all users attempting to log into sensitive systems. This may involve a combination of multiple authentication factors, such as a password, a physical security token, and biometric data. Such measures may reduce a risk of unauthorized access, even if a password is compromised. Thus, the SOPs provide to maintain network integrity, data confidentiality, and operational continuity.

In an embodiment, to enforce these SOPs and ensure that communications adhere to established security policies, the organizations may deploy firewalls. In an example, as shown in Fig. 1, a firewall 112 may be positioned between the local network 102 and the public network 110. The firewall 112 may act as a barrier, filtering incoming and outgoing network traffic based on predetermined security rules.

In an example, the firewall 112 may be configured to examine each packet of data transmitted by the local network 102, by comparing content of the data packet against a set of predefined rules. These rules may specify which types of traffic are allowed or blocked, which ports may be used for communication, and which IP addresses are permitted to connect. For example, the firewall 112 may be configured to allow outgoing web traffic on port 80 (HTTP) and port 443 (HTTPS) but block incoming traffic on these ports to prevent external entities from accessing internal web servers of the local network 102. Additionally, the firewall 112 may be programmed to block traffic from known malicious IP addresses, restrict unauthorized file transfers, and enforce encryption policies to prevent data leakage.

In some situations, the firewall 112 may not be sufficient to detect and prevent all types of sophisticated cyber threats. For example, advanced persistent threats (APTs) or zero-day exploits may bypass traditional firewall defences by using encrypted traffic, exploiting software vulnerabilities, or leveraging social engineering techniques. Attackers may also disguise malicious payloads within legitimate network traffic, making it difficult for the firewall 112 to differentiate between normal and harmful activities.

Accordingly, to avoid these security gaps, the network environment 100 may include an intrusion detection system (IDS) 114. In an example, the IDS 114 may provide an additional layer of security by monitoring network traffic for suspicious patterns, unauthorized access attempts, or deviations from normal network behaviour. In an example, the IDS 114 may be connected at an intersection of the firewall 112 and the switch 108 and may be configured to receive a copy of the data traffic that is meant for the local network 102 for analysis. By inspecting this mirrored traffic, the IDS 114 may identify potential threats in real-time without interfering with the actual flow of data within the local network 102.

In an embodiment, the IDS 114 may be any computer or processing device such as, for example, a server, general-purpose personal computer (PC), workstation, UNIX-based workstation, embedded system, or any other suitable device that may be programmed to perform intrusion detection operations. In an example, the IDS 114 may be implemented as a local system physically deployed within the facility 104, where the IDS 114 may directly monitor network traffic and perform real-time analysis on-site. Alternatively, the IDS 114 may be remotely accessible, for example, over the public network 110. Additionally, the functionality of the IDS 114 may be implemented as a single, standalone service running on a dedicated machine or distributed across multiple servers.

In an embodiment, upon detecting an anomaly or unauthorized activity, the IDS 114 may generate a real-time alert that is transmitted to a client device 116 of an administrator. In an example, the client device 116 may be a workstation, laptop, tablet, or mobile device, allowing the administrator to promptly review security alerts and take corrective actions as necessary. In an example, the alert may include details such as a source and destination IP addresses of a suspicious traffic, type of protocol used, timestamps, and an analysis of the detected threat. Additionally, the IDS 114 may store all detected security events and network anomalies within a database 118. In an example, the database 118 may serve as a central repository for intrusion detection logs, historical attack data, and diagnostics, enabling forensic analysis and long-term security monitoring.

For the IDS 114 to effectively analyze the data packets, the IDS 114 may need to identify protocol associated with each data packet received by the data IDS 114. The protocol identification process is carried out because different protocols require different parsing and inspection techniques to accurately detect potential threats. An aspect of the present subject matter provides for optimizing the process of identifying the protocol associated with incoming data packets before subjecting them to detailed analysis by the IDS 114. In an example, the optimization of the process of identification the protocol associated with incoming data packets may include configuring the IDS 114 to identify the protocols used most frequently in the local network 102. This process of identifying the most frequent protocols may be carried out periodically. In one example, when the IDS 114 is commissioned, the IDS 114 may perform an initial analysis of network traffic to determine the prevalence of various protocols. A predetermined span of time may be defined for this analysis, for example, depending on typical usage patterns of the local network 102.

During this initial analysis period, the IDS 114 may monitor all the incoming data packets and record the frequency of each protocol encountered. This information may then be used to create an optimized list of protocols, ordered by their frequency of occurrence in the network traffic. The most commonly used protocols may be placed at the top of the list, allowing the IDS 114 to check for these protocols first when identifying incoming data packets.

After the initial analysis, the IDS 114 may continue to periodically reassess and update this list to adapt to changes in network traffic patterns. For example, the IDS 114 may perform this reassessment every week or month, ensuring that the protocol identification process remains optimized for the current network environment. This dynamic approach allows the IDS 114 to maintain efficient data packet processing even as the network evolves over time.

In an operation, to perform the identification of the protocol associated with the incoming data packets in accordance with an embodiments of the present subject matter, the IDS 114 may obtain, from the switch 108 of the local network 102, a mirror stream of the data traffic associated with the nodes 106-1, 106-2, ..., and 106-N of the local network 102. In an example, the data traffic may include a plurality of data packets, each comprising an attribute indicative of a protocol associated with the respective data packets.

In an embodiment, upon receiving the data packets, the IDS 114 may sequentially compare the attribute of each data packet received within a configurable time window against one or more identification functions of each of a plurality of protocols that are arranged in a predefined order in a list of protocols, to identify a protocol in the list that matches the protocol associated with the respective data packet. In an example, this configurable time window may represent the predetermined span of time explained previously, during which the IDS 114 analyzes the network traffic to determine prevalence of the protocols in the network traffic.

In an example, the protocols in the list may include those that are supported by the IDS 114. In an example, the identification functions associated with the protocols in the list may include a set of criteria against which the attributes of the data packets may be compared to determine the protocols associated with the data packets.

In an embodiment, the IDS 114 may determine a prevalence of the protocol associated with each of the data packets in the local network 102 received over the configurable time window. In an example, the prevalence may indicate a frequency of occurrence of each protocol across the plurality of data packets. For example, in an industrial or building automation environment, the IDS 114 may analyze network traffic to determine the occurrence frequency of protocols such as BACnet and Modbus. During a configurable time window, if the IDS 114 observes that the majority of data packets are associated with the BACnet protocol, the IDS 114 may identify the BACnet protocol as a most prevalent protocol in the local network 102. Similarly, if a significant number of data packets correspond to the Modbus protocol but occur less frequently than the BACnet protocol, the IDS 114 may consider the Modbus protocol as the second most frequently occurring protocol within the local network 102.

In an embodiment, the IDS 114 may reorder the protocols in the ordered list based on the determined prevalence making a reordered list of protocols. In this process, the protocol with the highest prevalence may be positioned first in the reordered list, followed by the remaining protocols in decreasing order of prevalence. In an example, the reordered list may be stored in the database 118 of the IDS 114 and applied for the identification of protocols associated with data packets received after the configurable time window, remaining in effect until the next reordering of the list.

Thus, the reordering of the list of protocols based on the prevalence of the protocols observed in the traffic data of the local network 102 ensures that the IDS 114 prioritizes the identification of frequently occurring protocols in the local network 102, thereby reducing the time required to match incoming data packets with their respective protocols. This optimization minimizes delays in deep packet inspection (DPI) and other security analyses to be performed by the IDS 114 on the data packets.

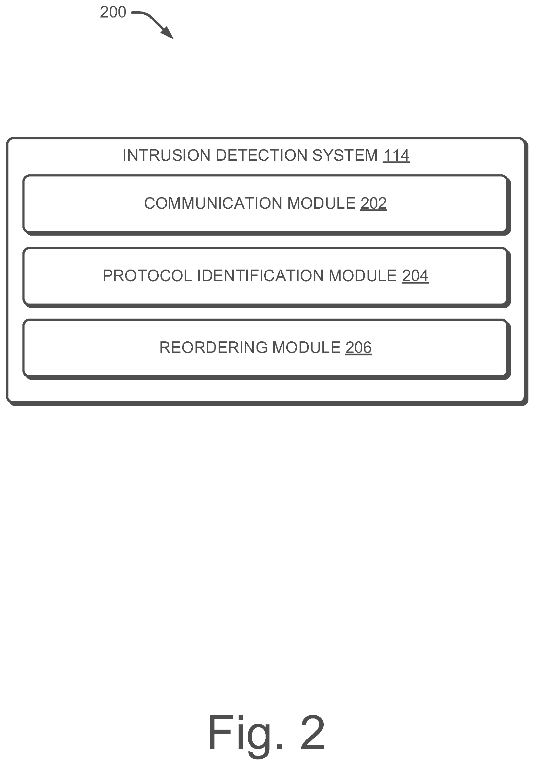

Fig. 2 illustrates a block diagram 200 of the IDS 114, in accordance with an example implementation of the present subject matter.

In an example, the IDS 114 may be an independent physical server, a server cluster, or a distributed system formed by a plurality of physical servers. In some embodiments, the IDS 114 may also be a cloud-based server that provides flexible intrusion detection capabilities. For example, a cloud-based IDS 114 may offer on-demand resource allocation, allowing the IDS 114 to dynamically adjust its processing power based on network traffic volume and threat landscape. Additionally, the cloud-based IDS 114 may facilitate centralized management of multiple network segments or geographically dispersed locations, providing a unified view of security events across the entire organization.

The IDS 114 may be operable to detect potential threats to a network infrastructure of an organization,. The IDS 114 may monitor traffic data and notify the administrator upon identification of potential threats, or, in some cases, take predefined corrective actions. As explained previously, for the IDS 114 to be able to analyze the traffic data, it is necessary that IDS 114 is able to identify protocol associated with the data packets of the traffic data. Different protocols have distinct characteristics and potential vulnerabilities, and accurate protocol identification enables the IDS 114 to apply appropriate analysis techniques and security rules. For example, identifying whether a data packet uses HTTP, FTP, or a custom protocol allows the IDS 114 to scrutinize the data packet for protocol-specific attacks or anomalies.

The IDS 114, according to embodiments of the present subject matter, is usable to identify protocols associated with the data packets obtained from the switch 108 of the local network 102. This rapid protocol identification may be achieved through an optimized approach that prioritizes commonly used protocols and employs efficient matching algorithms. By swiftly determining the protocol of each data packet, the IDS 114 may more effectively filter and analyze the traffic data of the local network 102, reducing the time required to detect potential security threats. This optimization enables the IDS 114 to handle high-volume network traffic in real-time, ensuring efficient security monitoring without introducing significant latency or performance bottlenecks in the network infrastructure.

In an embodiment, to implement the workflows for managing the optimization of the process of protocol identification associated with the data packets, the IDS 114 includes a communication module 202. In an example, the communication module 202 may be configured to obtain, from the switch 108 of the local network 102, the mirror stream of the traffic data associated with the nodes 106-1, 106-2, ..., and 106-N of the local network 102. Although the present example implementation has been described in respect of a single switch 108, in other implementations, the IDS 114 may be configured to inspect a mirror stream of all the traffic sent to the IDS 114 by different switches of the local network 102. This capability may allow the IDS 114 to monitor and analyze network traffic from multiple points within the network infrastructure, to assess security threats and network behavior across the entire local network 102. In an example, the traffic data received at the communication module 202 may include the data packets. Each data packet may include an attribute indicative of a protocol associated with the data packet. The attribute may be understood as a specific characteristic or field within packet header or payload of the data packet that may provide information about the protocol used for that data packet. In an example, these attributes may include, but are not limited to, port numbers, protocol identifiers, magic numbers, or specific patterns in the data packet structure. These attributes serve as identifiers that the IDS 114 may use to determine the protocol of each data packet, enabling analysis and threat detection based on protocol-specific rules and patterns.

In an embodiment, the IDS 114 further includes a protocol identification module 204. In an example, the protocol identification module 204 may be configured to identify the protocol associated with the data packets that are received within a configurable time window. To do so, the protocol identification module 204 may sequentially compare the attribute of each data packet that is received within the configurable time window against the identification functions of the protocols in the list of protocols, in an order in which the protocols occur in the list. The protocol identification module 204 may start with a first protocol in the list and progress through each subsequent protocol until a match is found. Based on this ordered comparison, the protocol identification module 204 may identify a protocol in the list that matches the protocol associated with the respective data packets.

In an embodiment, the IDS 114 includes a reordering module 206. In an example, the reordering module 206 may be configured to reorder the positioning of the protocols in the list based on the prevalence of the protocols in the communications within the local network 102. In doing so, the reordering module 206 may determine a prevalence of the protocol associated with each of the data packets in the local network 102 received over the configurable time window. As explained previously, the prevalence indicates a frequency of occurrence of each protocol across the data packets. In an example, once the prevalence of each protocol is determined, the reordering module 206 may reorder the protocols in the list based on the determined prevalence. In an example, in a process of reordering, the reordering module 206 may position a protocol of the list that has the highest prevalence, that is the protocol that occurs most frequently in the data packets, in the first position in the list. The remaining protocols may be positioned in decreasing order of prevalence in the list. In an example, the reordered list may be applied for identification of protocols associated with respect to data packets that are received after the configurable time window and until a next reordering of the list.

Accordingly, by implementing the reordering process, the IDS 114 may ensure that the protocols that are more frequently encountered in the local network 102 are moved towards the beginning of the ordered list, while less common protocols are shifted towards the end. This ensures that the most commonly encountered protocols are checked first during the protocol identification process, thereby reducing the average time required for protocol identification. This may lead to a more efficient threat detection and analysis of network communications by the IDS 114.

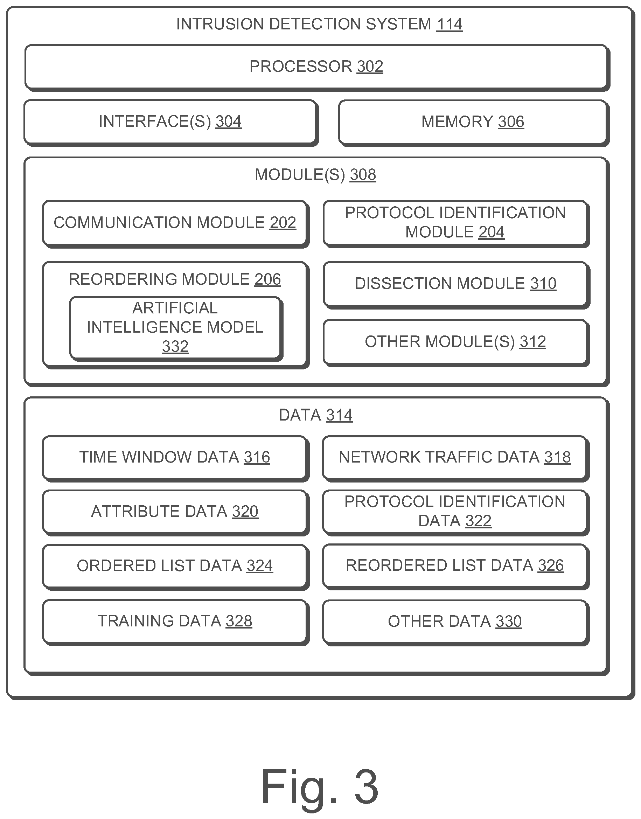

To elaborate on the functionality of the IDS 114 to optimize the process of identifying the protocol associated with the incoming data packets, reference is made to Fig. 3.

Fig. 3 illustrates the IDS 114 that optimizes the process of identification of the protocol associated with the data packets received corresponding to the traffic data of the local network 102, in accordance with another example implementation of the present subject matter.

Example implementations of the IDS 114 depicted in Fig. 3 may include, but are not limited to, an application server, a database server, a mainframe server, a cloud server (e.g., a hybrid, private, or public cloud), or a web server. In an example, the IDS 114 may be implemented as server nodes of an on-premise server or a remotely hosted cloud server. In an example, the IDS 114 may be communicatively coupled to the switch 108 to monitor network traffic effectively. In some implementations, the IDS 114 may be positioned behind the firewall 112 at a perimeter of the local network 102 to flag any malicious traffic breaking through to the local network 102.

In an embodiment, the IDS 114 may include a processor 302. In an example, the processor 302 may be implemented as microprocessors, microcomputers, microcontrollers, digital signal processors, central processing units, state machines, logic circuitries, and/or any devices that manipulate signals based on operational instructions.

In an embodiment, the IDS 114 may also include interface(s) 304. The interface(s) 304 may include a variety of software and hardware interfaces that allow interaction of the IDS 114 with other communication and computing devices, such as network entities, web servers, external repositories, and peripheral devices, such as input/output (I/O) devices. For example, the interface(s) 304 may couple the IDS 114 with the switch 108 allowing the IDS 114 to obtain the traffic data meant for the local network 102. In an example, the interface(s) 304 may also enable coupling of internal components, if any, of the IDS 114 with each other.

Further, in an embodiment, the IDS 114 may include a memory 306 coupled to the processor 302. The memory 306 may include any computer-readable medium known in the art including, for example, volatile memory (e.g., RAM), and/or non-volatile memory (e.g., EPROM, flash memory, etc.). The memory 306 may also be an external memory unit, such as a flash drive, a compact disk drive, an external hard disk drive, or the like. The IDS 114 may also include module(s) 308 and data 314 coupled to the processor 302. In one example, the module(s) 308 and data 314 may reside in the memory 306.

In an example, the data 314 may include time window data 316, network traffic data 318, attribute data 320, protocol identification data 322, ordered list data 324, reordered list data 326, training data 328, and other data 330. In an example, the module(s) 308 may include routines, programs, objects, components, data structures, and the like, which perform particular tasks or implement particular abstract data types. The module(s) 308 further includes modules that supplement applications on the IDS 114, for example, modules of an operating system. The data 314 serves, amongst other things, as a repository for storing data that may be fetched, processed, received, or generated by one or more of the module(s) 308.

In an example, the module(s) 308 may include a dissection module 310, and other module(s) 312 in addition to the previously mentioned communication module 202, protocol identification module 204, and reordering module 206. The other module(s) 312 may include programs or coded instructions that supplement applications and functions, for example, programs in the operating system of the IDS 114.

In an embodiment, a start time and an end time of the configurable time window may be set within the IDS 114 at the time of setting up the IDS 114 within the local network 102 for optimizing the protocol identification operations. In an example, the start time may correspond to a point when the IDS 114 begins analyzing the incoming data packets for protocol prevalence, while the end time may indicate when the analysis for that specific time window is to be concluded. The start time and the end time may be construed as a learning period for the IDS 114, during which the IDS 114 analyzes the protocols associated with the incoming data packets to determine the prevalence of each protocol in the network traffic. This learning period may allow the IDS 114 to gather statistical data on protocol usage, which may be subsequently used to reorder the protocols in the list of protocols based on their observed frequency. In an example, to define the start and the end time of the configurable time window, the administrator who may be responsible for managing the operation of the IDS 114 may use the communication module 202 to access settings of the IDS 114. In an example, through a user interface, that may be provided on the client device 116 by the communication module 202 of the IDS 114, the administrator may specify a duration of the configurable time window, which may be set in minutes, hours, or days, depending on characteristics of the local network 102 and security requirements. The administrator may also have the option to set multiple time windows with different durations to accommodate varying network traffic patterns, for example, for daytime and nighttime. For example, a shorter time window may be used during peak traffic hours to allow for more frequent reordering, while a longer window may be set for off-peak hours.

In an embodiment, when the IDS 114 is commissioned, the communication module 202 of the IDS 114 may begin obtaining, from the switch 108 of the local network 102, a mirror stream of the traffic data associated with the nodes 106-1, 106-2, ..., and 106-N of the local network 102. In an example, this mirror steam of the traffic data may be received continuously or at defined intervals and may be stored in the data 314 of the IDS 114 as the network traffic data 318. As explained previously, the traffic data may include the data packets corresponding to communication exchanges between the nodes 106-1, 106-2, ..., and 106-N of the local network 102. Each data packet may include one or more attributes that are indicative of a protocol associated with that respective data packet. These attributes may include, for example, specific byte patterns in a header or payload, port numbers, protocol-specific flags, or message structure identifiers that may be used to infer the protocol type of the data packet. For example, a data packet following the BACnet protocol may include a distinctive BACnet Virtual Link Control (BVLC) header, while a Modbus data packet may have a transaction identifier and function code unique to Modbus communication. Similarly, a data packet corresponding to the SNMP may include community strings and Object Identifier (OID) fields. Data corresponding to the attribute of each of the data packets of the traffic data may be stored in the data 314 as the attribute data 320 for further processing.

In an embodiment, the protocol identification module 204 may obtain the list of protocols from the data 314 in which the list of protocols may be stored as the ordered list data 324. Further, in an example, the protocol identification module 204 may then sequentially compare the attribute of each of the data packets, received between the start time and the end time of the configurable time window, to the identification functions of the protocols included the list in the order in which they occur in the list. For example, if the list includes BACnet, Modbus, and SNMP protocols at serial positions four, six, and ten respectively, then the attribute of a given data packet may be first be compared against the identification functions of the protocol listed at position one, followed by position two, and so on, until it reaches BACnet at position four. If the data packet is not identified as BACnet, the comparison continues sequentially to the identification functions of the protocols listed at positions five, six (Modbus), and so on, until either a matching protocol, such as the SNMP at position ten, is identified or the list is exhausted.

In an example, this comparison is performed to identify a protocol from the list of protocols that matches the protocol associated with each respective data packet. As explained previously, each protocol in the list of protocols may include its own identification functions that may be used to validate whether a protocol associated with a given data packet corresponds to any of the protocols in the list of protocols. In an example, these identification functions may include, but are not limited to, port number matching, magic number matching, partial parsing and validation, or the like. In an example, in the port number matching, the protocol identification module 204 may extract the attribute of a data packet that indicates the source or destination port and compare it against a known port number associated with a specific protocol. If the port number matches one typically used by a known protocol, such as port 47808 for BACnet or port 502 for Modbus, the data packet may be preliminarily classified under that protocol. In magic number matching, the protocol identification module 204 may look for specific byte patterns or "magic numbers" located at fixed offsets within the data packet that are uniquely associated with certain protocols. If a data packet contains such a recognizable signature, the corresponding protocol may be identified. Partial parsing and validation may involve inspecting the structure of the data packet beyond headers to determine if values at certain byte offsets conform to expected patterns or fall within valid ranges. For example, a value at a particular offset may need to belong to a predefined list of valid function codes, or a field representing packet length may need to match the actual size of the data packet. These identification functions together allow the protocol identification data 322 to recognize the protocol associated with each incoming data packet. In an example, the data corresponding to the identified protocols of the data packets received between the start time and the end time of the configurable time window may be stored in the data 314 as the protocol identification data 322.

In an embodiment, based on the protocol identification data 322, the reordering module 206 may determine the prevalence of each protocol in the local network 102 that is identified as being associated with the data packets received within the configurable time window. Based on the determined prevalence, the reordering module 206 may reorder the protocols in the list of protocols in such a manner that protocols with a higher prevalence are positioned earlier in the reordered list, followed by remaining protocols that are positioned in in the reordered list in decreasing order of prevalence. In an example, to determine the prevalence of the protocol associated with each of the data packets received within the configurable time window in the local network 102, the reordering module 206 may count the number of occurrences of each protocol across the data packets received during the configurable time window. Further, the reordering module 206 may calculate the frequency of occurrence for each protocol by dividing the count of data packets associated with each protocol by the total number of data packets received over the configurable time window, and determine the prevalence of each protocol based on the calculated frequency of occurrence. A higher frequency of occurrence may be indicative of a higher prevalence. For example, if during the configurable time window, the IDS 114 receives 10,000 data packets, and among those, 4,500 are identified as associated with the BACnet protocol, 3,000 with Modbus protocol, and 1,500 with SNMP protocol, then BACnet, with a frequency of 0.45, may be considered the most prevalent, followed by Modbus at 0.30, and SNMP at 0.15. Based on this determination, the reordered list of the protocols may place the BACnet protocol first, followed by the Modbus protocol, and then the SNMP. In an example, the reordered ordered list of protocols may be stored in the data 314 as the reordered list data 326 for further use.

In an embodiment, once the configurable time window expires, the reordering module 206 may apply the reordered list of protocols to identify protocols associated with data packets that are received at the IDS 114 after the expiry of the configurable time window. In another embodiment, once the configurable time window expires, the reordering module 206 may apply the reordered list of protocols after a predetermined period following the expiry of the configurable time window. This reordered list may be used to identify protocols associated with data packets received at the IDS 114 subsequent to this predetermined period. For example, if the configurable time window is set to 1 hour and expires at 2:00 PM, the reordering module 206 may wait for an additional 15 minutes before applying the reordered list at 2:15 PM. This delay period may be configurable and may serve various purposes, such as allowing time for any ongoing processes to complete, ensuring stability of the IDS 114, or aligning the operating system of the IDS 114 with the new list.

In an example, each data packet received at the IDS 114 after the expiry of the configurable time window may be sequentially evaluated against the identification functions of the protocols in the reordered list. In an example, this evaluation continues iteratively through the reordered list until a matching protocol is identified based on the attributes of the data packet. Once a match is found, the iteration ceases, and the matched protocol is used as the basis for further processing. In an example, the data packet is then passed to a dissection module 310 of the IDS 114, which may perform a protocol-specific deep inspection and analysis of contents of the data packet. This is done to check whether the data packet carries any malicious payload, unauthorized command, or exhibits anomalous behavior. Thus, by prioritizing protocols that occur more frequently in the local network 102, the process of identification and analysis becomes more efficient, allowing the IDS 114 to detect threats in real-time with reduced processing delay and optimized resource utilization.

In an embodiment, the reordered list of protocols may be applied for a configurable time period, which may be set by the operator of the IDS 114. In an example, once this configurable time period elapses, the next reordering of the protocols in the reordered list may be carried out. In an example, this configurable time period may be fixed, meaning that the process of the next reordering may be triggered at regular, predefined intervals, irrespective of changes in network traffic. For example, if the operator sets the configurable time period to one hour, the reordering module 206 may automatically perform the reordering process every hour. This may ensure consistent updates to the protocol list based on traffic data collected during each time period, allowing for adaptive and timely optimization of the protocol identification process.

In an alternative embodiment, the next reordering process may be triggered based on certain conditions that may depend on time taken to identify the protocol of the data packets based on the currently applied list. For example, if the time taken to identify protocol of the data packets based on the current reordered list exceeds a configurable threshold, it may indicate a change in the prevalence of protocols across the network traffic. In such cases, the reordering module 206 may initiate the reordering process before the fixed time period elapses. This may allow the IDS 114 to adapt more quickly to changes in network traffic patterns. For example, if the configurable threshold for the protocol identification time is set to 100 milliseconds, and the average identification time increases to 150 milliseconds, the reordering module 206 may determine that the currently applied reordered list of protocols is no longer optimal for efficient identification of the protocol of the data packets. Consequently, the reordering module 206 may trigger a reordering of the currently applied list of protocols.

In an embodiment, the communication module 202 may allow the administrator to configure thresholds for triggering a workflow to reorder the current list at instances, such as when a significant change in protocol distribution is detected. Once configured, these settings may be stored in the data 314 as the time window data 316 and used by the IDS 114 to determine when to initiate the protocol list reordering process. In an example, the reordering module 206 may analyze signal flow data pertaining to flow of the data packets in the local network 102. When the reordering module 206 detects a change in pattern of flow of the data packets in the local network 102 to be above a predefined threshold, the reordering module 206 may initiate a reordering of the protocols in the list of protocols. The reordered list may then be applied to the identification process for subsequent data packets. For example, in an industrial control network where traffic usually consists of 60% Modbus protocol, 30% SNMP, and 10% BACnet protocol, the reordering module 206 may detect a sudden shift to 30% Modbus protocol, 20% SNMP, and 50% BACnet protocol for reasons, for example, due to a large-scale update of building automation systems, activation of multiple new HVAC units, or a security incident involving unauthorized access to devices using the BACnet protocol. If this 40% increase in BACnet protocol traffic exceeds the predefined threshold, the reordering module 206 may trigger a reordering, moving BACnet to the top of a reordered list of protocols. This may allow the IDS 114 to maintain efficiency in protocol identification when faced with shifts in network traffic composition, which may indicate changes in network usage or security events.

In an embodiment, the reordering module 206 may include an artificial intelligence (AI) model 332. The AI model 332 may be trained to perform the reordering of the protocols in the list of protocols based on data corresponding to previous instances of reordering of the list. Such cases may arise, for example, when the configuration of a current network, such as the local network 102, closely resembles previous states. For example, if the nodes 106-1, 106-2, ..., and 106-N in the local network 102 remain unchanged over a certain period, or if the topology of the local network 102 and usage patterns of the local network 102 are consistent with historic usage patterns, it may be inferred that the prevalence of protocols in the local network 102 is likely to follow similar patterns. In such scenarios, leveraging the data corresponding to the previous instances of reordering of the list that pertain to a similar time period or network condition may provide a reliable basis for reordering the protocols in the list of protocols.

In an example, to gather data to train the AI model 332 to enable it to predict a sequence of protocols for reordering of the list, the reordering module 206 may collect each instance of reordering of the protocols in the list of protocols done in respect of determination of the prevalence, along with timestamp information indicating the time period during which each reordered list is applicable. This information may be stored in the data 314 as the training data 328. The AI model 332 may be trained to analyze patterns in the training data 328, correlate these patterns with network conditions and time periods, and generate predictions for optimal reordering of the list based on current network states.

In an example, to reorder the protocols in the list of protocols based on the previous instances of the reordering, the AI model 332 may obtain instances of reordering of the list that pertain to a predefined time window matching a current time window for which the reordering of the list is required and analyze the instances to determine a frequency of occurrence for each protocol in the list across data packets received during each instance of the predefined time window. In an example, the AI model 332 may then calculate a weighting factor for each protocol based on the determined frequency of occurrence of the protocol across the instances. In an example, the AI model 332 may calculate an average frequency for each protocol across the instances and apply the calculated weighting factor to the average frequency to generate a weighted frequency for each protocol. In an example, the AI model 332 may then sort the protocols in the list based on weighted frequencies in descending order and reorder the protocols in the list of protocols according to the sorted order, positioning protocols with higher weighted frequencies earlier in the list.

For example, in a scenario where the AI model 332 is analyzing data from an industrial network environment over the past week during the 8:00 AM to 9:00 AM time window, the AI model 332 may find that the BACnet protocol has an average frequency of 40% with a consistent trend, the SNMP has an average frequency of 30% with a slightly increasing trend, and the Modbus protocol has an average frequency of 20% with a stable trend. After applying weighting factors based on these trends, the AI model 332 may calculate weighted frequencies of 42% for BACnet, 33% for SNMP, and 20% for Modbus. Consequently, the reordered list may position these protocols in the order of BACnet, SNMP, and then Modbus, reflecting their relative prevalence and recent trends in the network traffic during that specific time window.

This may allow the IDS 114 to proactively adjust its protocol identification strategy without requiring a full analysis of current prevalence patterns, improving efficiency in protocol identification.

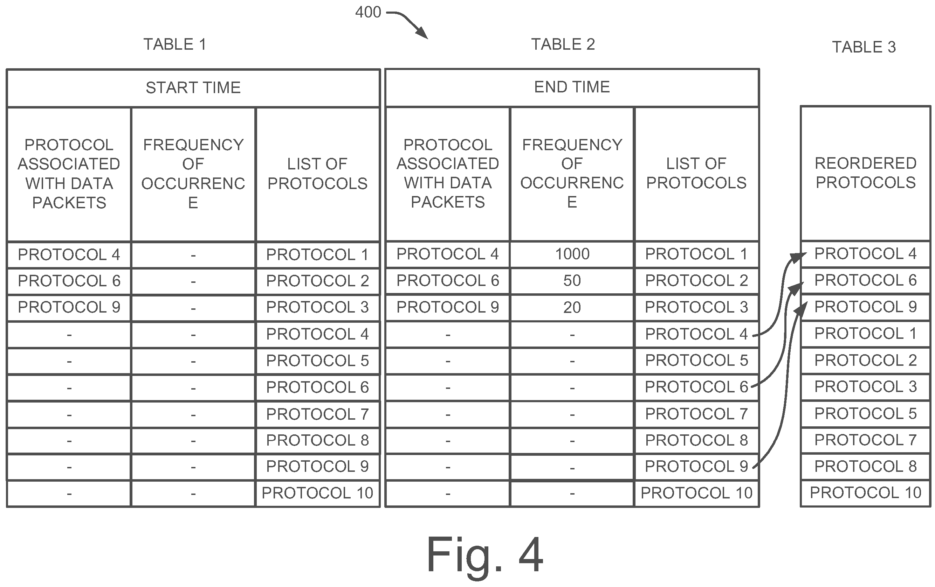

Fig. 4 illustrates a chart 400 illustrating reordering of the protocols in the list of protocols, in accordance with another example implementation of the present subject matter.

As explained previously, to reduce the run time of the identification period of the protocols associated with the data packets that are received at the IDS 114, and to limit packet loss and speed up analysis of the data packets, the IDS 114 performs reordering of the protocols in the list of protocols based on the frequency of occurrence of each protocol in the network traffic. This reordering prioritizes the most commonly occurring protocols, positioning them earlier in the list for faster identification. By doing so, the IDS 114 may more efficiently process incoming packets, improving overall performance of the IDS 114 and reducing the likelihood of missing critical data due to processing delays.

In accordance with an example implementation of the present subject matter, as shown in Table 1 of Fig. 4, in a process to reorder the protocols in the list of protocols, at the start time of the configurable time window, the IDS 114 may start analyzing the attribute of the incoming data packets to determine the protocol associated with each of the data packets. To determine the protocol associated with each data packet, the IDS 114 may iterate the attribute of each data packet sequentially against the identification functions of each protocol in the list of protocols. As shown in Table 1 of Fig. 4, even if there is a data packet whose associated protocol is protocol 9, the IDS 114 may be required to iterate through the entire list of protocols until the matching protocol, 9, is found. This process is iterated until a matching protocol for each of the data packets is found in the list of protocols.

Furthermore, at the end time of the configurable time window, the frequency of occurrence of each protocol across the data packets that are received within the configurable time window may be calculated. As shown in Table 2, the IDS 114 may determine that, at the end of the configurable time window of 10 minutes, the protocol that is at 4th number in the list of protocols may have a frequency of occurrence F of 1000, the protocol which is at the 6th place in the ordered list of protocols may have the frequency of occurrence of 50, and the protocol that is at the 9th place in the list of protocols may have the frequency of occurrence of 20. In an example, based on the determination of the frequency of occurrence of each protocol, the IDS 114 may reorder the protocols in the list of protocols. In an example, the reordering may be performed such that the protocols with higher frequencies of occurrence are positioned earlier in the list. As shown in Table 3, the protocol with the highest frequency, i.e., the protocol 4th in the list of protocols, is positioned at the first position in the reordered list of protocols. Similarly, the protocol at the 6th position in the list, having the second-highest frequency, is moved to the second position in the reordered list. Likewise, the protocol at the 9th position in the list of protocols, with the third-highest frequency, is placed at the third position in the reordered list. The remaining protocols in the list, which were not identified during the time window, may be maintained as per their relative order but are positioned after the frequently occurring protocols in the reordered list. In an example, the reordered list of protocols may be applied for identification of protocols associated with data packets that are received after the configurable time window expires and until a next reordering of the ordered list of protocols.

Accordingly, this dynamic reordering of the protocols in the list of protocols allows the IDS 114 to adapt to changing network traffic patterns in real-time, thereby reducing the average time required for protocol identification and leading to more efficient data packet processing. This optimization may result in reduced latency in data packet analysis, improved ability to handle high-volume traffic without data packet loss, more efficient use of IDS 114 resources, enhanced capability to detect and analyze emerging threats, and flexibility to adjust to different network environments or changing usage patterns over time. By prioritizing the most frequently occurring protocols, the IDS 114 may maintain its effectiveness and efficiency in monitoring and securing network traffic, even as the composition of that traffic evolves, ensuring robust protection against potential security threats.

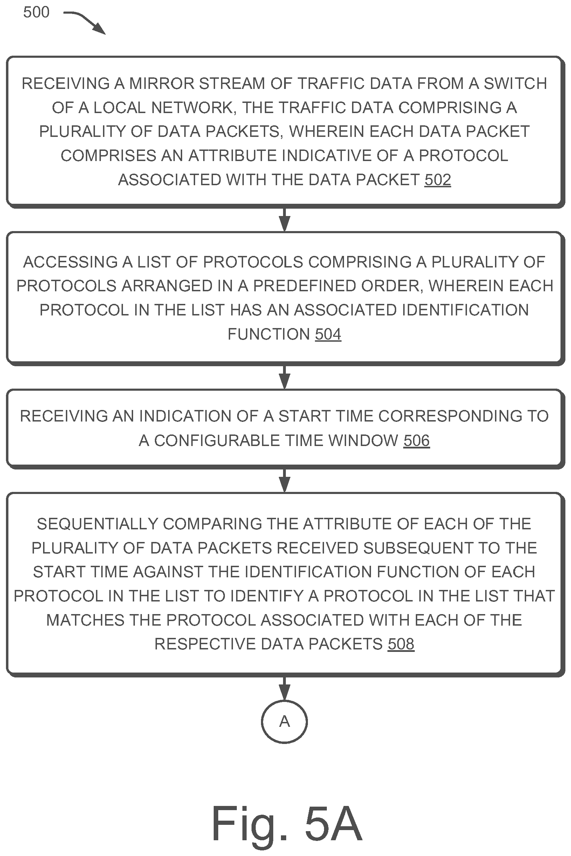

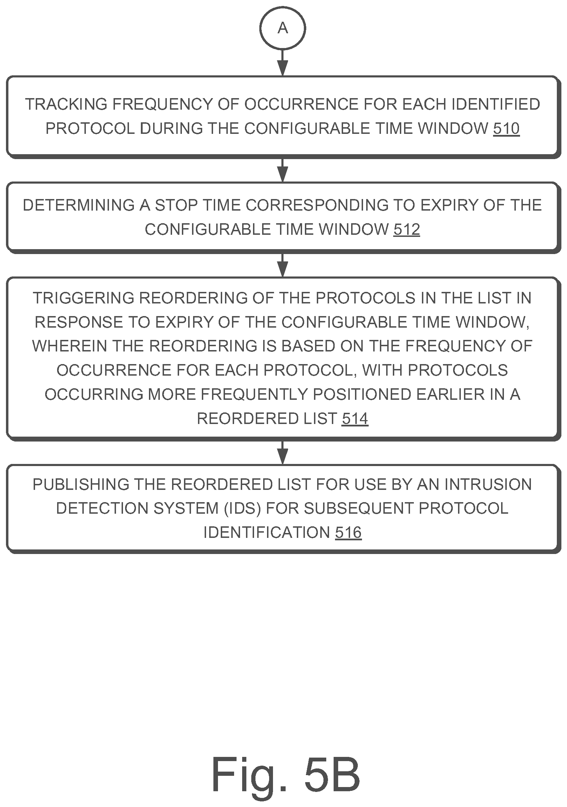

Figs. 5A and 5B illustrates a method 500 of protocol identification, according to an example implementation of the present subject matter. Although the method 500 may be implemented in a variety of computer-based systems, for the ease of explanation, the present description of the example method 500 of protocol identification is provided in reference to the above-described IDS 114.

It may be understood that blocks of the method 500 may be implemented by a processor(s) or computing device(s) through any suitable hardware, non-transitory machine-readable instructions, or a combination thereof. The blocks of the method 600 may be executed based on instructions stored in a non-transitory computer-readable medium, as will be readily understood. The non-transitory computer-readable medium may include, for example, digital memories, magnetic storage media such as magnetic disks and magnetic tapes, hard drives, or optically readable digital data storage media.

The order in which the method 500 is described is not intended to be construed as a limitation, and any number of the described method blocks may be combined in any order to implement the method 500, or an alternative method.

Referring to Fig. 5A, at block 502, the method 500 may include receiving a mirror stream of traffic data from a switch 108 of a local network 102. In an example, the traffic data includes a plurality of data packets. Each data packet includes an attribute indicative of a protocol associated with the data packet. In an example, the communication module 202 receives the traffic data from the switch 108 of the local network 102.

At block 504, the method 500 may include accessing a list of protocols. In an example, the protocol identification module 204 obtains the list of protocols from the database 118 of the IDS 114. As explained previously, the list of protocols may include a plurality of protocols arranged in a predefined order. Each protocol in the list may have an associated identification function that enables the IDS 114 to determine whether a given data packet conforms to that protocol. In an example, the identification functions may involve techniques such as port number matching, magic number detection, and partial parsing of the packet structure, or the like.

At block 506, the method 500 may include receiving an indication of a start time corresponding to a configurable time window. As explained previously, the start time may indicate the beginning of the time interval during which the monitoring of the protocol associated with the data packets is to occur. In an example, the operator of the IDS 114 may define the start time, for example, at the time of commissioning of the IDS 114. In an example, the protocol identification module 204 may obtain the start time of the configurable time window from the database 118 of the IDS 114.

At block 508, the method 500 may include sequentially comparing the attribute of each of the data packets that are received subsequent to the start time against the identification function of each protocol in the list to identify a protocol in the list that matches the protocol associated with each of the respective data packets. The protocol identification module 204 may performs this comparison of the attribute of each data packet that are received within the configurable time window against the identification functions of the protocols in the list. In an example, the comparison is performed in the order in which the protocols are listed in the list of protocols, and the process continues until a match is found between the attribute of the data packet and the identification function of a protocol. Once a match is identified, the corresponding protocol is determined to be associated with that data packet.

Referring to Fig. 5B, at block 510, the method 500 may include tracking a frequency of occurrence for each identified protocol during the configurable time window. In an example, the frequency of occurrence may correspond to how often each protocol is identified as being associated with incoming data packets within the duration of the configurable time window. The reordering module 206 may calculate the frequency of occurrence of each protocol by counting the number of times each protocol is matched during the identification process and then dividing this count by the total number of data packets received during the same time window. This computation may allow the IDS 114 to quantify the prevalence of each protocol in the local network 102. The resulting frequency values may then be used for reordering of the protocols in the list for improved protocol identification efficiency.

At block 512, the method 500 may include determining a stop time corresponding to expiry of the configurable time window. The reordering module 206 obtains the stop time from the database 118 of the IDS 114. As explained previously, the stop time of the configurable time window may correspond to the point at which the IDS 114 concludes tracking the frequency of occurrence of each identified protocol. In an example, similar to the start time, the operator of the IDS 114 may also define the end time of the configurable time window during the commissioning or configuration of the IDS 114. Reaching the end time of the configurable time window may indicate the conclusion of the period during which the IDS 114 monitors the incoming data packets to determine how frequently each protocol occurs. This stop time signals the transition from protocol frequency tracking to the reordering of the protocol list based on the collected frequency data.

At block 514, the method 500 may include triggering reordering of the protocols in the list of protocols in response to expiry of the configurable time window. In an example, the reordering is based on the frequency of occurrence for each protocol, with protocols occurring more frequently positioned earlier in a reordered list of protocols. The reordering module 206 reorders the protocols in the list of protocols in such a manner that the most frequently occurring protocols, as determined during the configurable time window, appear at the beginning of the reordered list, followed by protocols with progressively lower frequencies of occurrence. For example, if during the configurable time window, the protocol BACnet is identified in 50% of the data packets, Modbus in 30%, and SNMP in 20%, the reordered list may position the BACnet protocol first, the Modbus protocol second, and SNMP third. This dynamic reordering ensures that frequently used protocols are prioritized during subsequent protocol identification operations, thereby optimizing the performance and responsiveness of the IDS 114.

At block 516, the method 500 may include publishing the reordered list for use by the IDS 114 for subsequent protocol identification. The reordering module 206 may publish the reordered list of protocols to be used for identifying the protocol associated with data packets that are received after the expiry of the configurable time window. This reordered list may persist and continue to be used by the IDS 114 until the next reordering event is triggered, based on a subsequent configurable time window or other scheduling criteria defined by the operator.

Accordingly, the present subject matter enables reduction in the runtime of the protocol identification process for the data packets received at the IDS 114. By reordering the list of protocols based on their frequency of occurrence, the IDS 114 may prioritize protocol identification operations more efficiently, thereby limiting the data packet loss and accelerating the analysis of incoming data packets for threat detection.

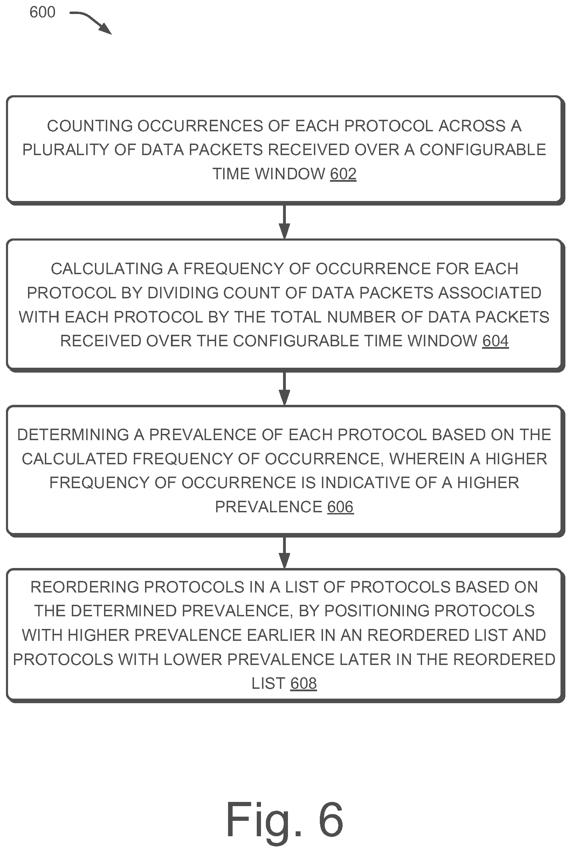

Fig 6 illustrates a method 600 for determining prevalence of the protocol associated with each of the data packets in the local network 102 that are received during the configurable time window, according to an example implementation of the present subject matter. Although the method 600 may be implemented in a variety of computer-based systems, for the ease of explanation, the present description of the example method 600 for determining the prevalence of the protocols is provided in reference to the above-described IDS 114.

It may be understood that blocks of the method 600 may be implemented by a processor(s) or computing device(s) through any suitable hardware, non-transitory machine-readable instructions, or a combination thereof. The blocks of the method 600 may be executed based on instructions stored in a non-transitory computer-readable medium, as will be readily understood. The non-transitory computer-readable medium may include, for example, digital memories, magnetic storage media such as magnetic disks and magnetic tapes, hard drives, or optically readable digital data storage media.

The order in which the method 600 is described is not intended to be construed as a limitation, and any number of the described method blocks may be combined in any order to implement the method 600, or an alternative method.

As explained previously, determining the prevalence of each protocol associated with the data packets received within the configurable time window may be based on calculating the frequency of occurrence of each protocol. The prevalence of a protocol may represent the extent to which that protocol appears in the network traffic during the configurable time window. Accordingly, the prevalence of each protocol, as determined based on the frequency of occurrence, may be used to reorder the protocols in the list of protocols, such that the protocols with higher prevalence are positioned earlier in the reordered list, thereby optimizing subsequent protocol identification processes.

As indicated in Fig. 6, at block 602, the method 600 for determining the prevalence of the protocol in the local network 102 may include counting occurrences of each protocol across the data packets that are received over the configurable time window. To do this, the reordering module 206 may analyze the protocol identification data 322, which may include the identifier associated with each data packet received during the configurable time window. The reordering module 206 may increment a count for each protocol every time a data packet is identified as being associated with that protocol. This counting operation continues until all the data packets within the configurable time window have been processed, resulting in a frequency count for each protocol.

At block 604, the method 600 may include calculating the frequency of occurrence for each protocol by dividing the count of data packets associated with each protocol by the total number of data packets received over the configurable time window. As explained previously, the reordering module 206 may retrieve the individual counts of the protocols and compute the ratio of each count to the total number of data packets received during the same time window. The resulting values represent the frequency of occurrence for each protocol. The values of the frequency of occurrence may provide a quantitative basis for assessing the relative prevalence of the protocols within the local network 102 during the configurable time window.

At block 606, the method 600 may include determining a prevalence of each protocol based on the calculated frequency of occurrence, wherein a higher frequency of occurrence is indicative of a higher prevalence. As explained previously, the reordering module 206 may interpret the calculated values of the frequency of occurrence as indicators of the prevalence of the protocols within the local network 102 during the configurable time window. The higher the frequency of occurrence for a given protocol, the more dominant or prevalent that protocol is considered to be in the observed traffic. This prevalence information may then be used by the reordering module 206 as a basis for reordering the protocols in the list of protocols to optimize subsequent protocol identification operations.

At block 608, the method 600 may include reordering the protocols included in the list of protocols based on the determined prevalence, by positioning protocols with higher prevalence earlier in a reordered list and protocols with lower prevalence later in the reordered list.

By reordering the protocols in the ordered list of protocols based on the prevalence of the protocols in the network traffic, the present subject matter allows for improved efficiency in protocol identification. Prioritizing more prevalent protocols enables faster matching during protocol detection, reducing processing time and computational overhead. This may minimize latency, lower the chances of the data packet loss, and enhance the overall performance of deep packet inspection and threat detection in the local network 102.

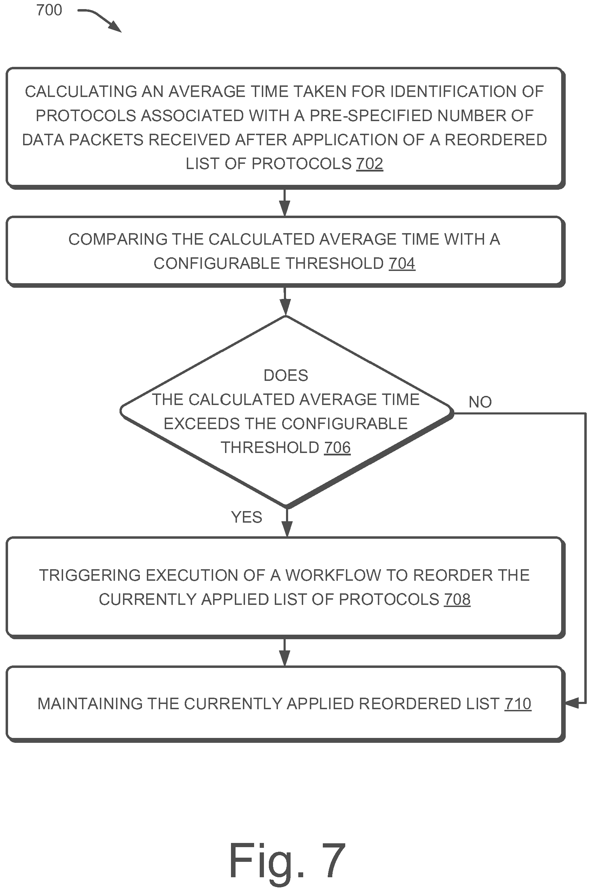

Fig. 7 illustrates a method 700 for triggering a next reordering process for a reordered list of protocols that is currently being used by the IDS 114, according to an example implementation of the present subject matter. Although the method 700 may be implemented in a variety of computer-based systems, for the ease of explanation, the present description of the example method 700 for dynamically triggering the next reordering process is provided in reference to the above-described IDS 114.

It may be understood that blocks of the method 700 may be implemented by a processor(s) or computing device(s) through any suitable hardware, non-transitory machine-readable instructions, or a combination thereof. The blocks of the method 700 may be executed based on instructions stored in a non-transitory computer-readable medium, as will be readily understood. The non-transitory computer-readable medium may include, for example, digital memories, magnetic storage media such as magnetic disks and magnetic tapes, hard drives, or optically readable digital data storage media.

The order in which the method 700 is described is not intended to be construed as a limitation, and any number of the described method blocks may be combined in any order to implement the method 700, or an alternative method.

As explained previously, once the reordered list of protocols is applied for the purpose of identifying protocols associated with data packets received thereafter, there may be situations where the currently applied list may become outdated. This may occur, for example, due to changes in the pattern of occurrence of the protocols in the network traffic over time. As a result, the currently applied reordered list of protocols may no longer reflect the current behavior of the network traffic, thereby increasing the time required to identify protocol associated with incoming data packets. In view of this, there may be a need to reorder the currently applied reordered list of protocols before the expiration of the configurable time period that may be set by the operator for the next reordering to take place.

Accordingly, in an embodiment, at block 702, the method 700 may include calculating an average time taken for identification of a protocol associated with a pre-specified number of data packets received after the application of the reordered list of protocols. To do this, the reordering module 206 may monitor the protocol identification process for the specified number of the data packets and record the individual time durations taken for identifying the corresponding protocols. The reordering module 206 may then compute the average identification time by aggregating these durations and dividing by the number of data packets evaluated. This average time may serve as a metric to assess the efficiency of the currently applied reordered list of protocols.

At block 704, the method 700 may include comparing the calculated average time with a configurable threshold. The reordering module 206 may retrieve the threshold value set by the operator and compare threshold value against the calculated average time.

At block 706, an assessment may be made as to whether the calculated average time exceeds the configurable threshold. For example, the configurable threshold defined by the operator may be 100 milliseconds. If the reordering module 206 determines that the calculated average time exceeds this threshold, it may indicate that the currently applied reordered list of protocols is no longer optimal for efficient identification of protocols. This condition may suggest that changes in the network traffic pattern have rendered the currently applied list less effective, thereby warranting a reordering of the list to reflect updated protocol occurrence patterns. In case the assessment is affirmative, the method 700 may proceed to block 708.

At block 708, the method 700 may include triggering the execution of the workflow to reorder the currently applied list of protocols. To do this, the reordering module 206 may initiate the steps described in method 500.

However, if at block 706, it is determined that the calculated average time does not exceed the configurable threshold, the method 700 may proceed to block 710. At block 710, the method 700 may include maintaining the currently applied reordered list of protocols for continued use in the protocol identification. In such a case, no reordering is triggered, and the IDS 114 may continue to use the existing reordered list until either the configurable time period expires, or a future assessment necessitates a reordering.

Accordingly, the present subject matter allows for dynamic evaluation of the effectiveness of the reordered list that is currently used by the IDS 114. This may ensure that protocol identification remains efficient and aligned with current network traffic patterns, thereby minimizing latency and optimizing threat detection capabilities of the IDS 114.

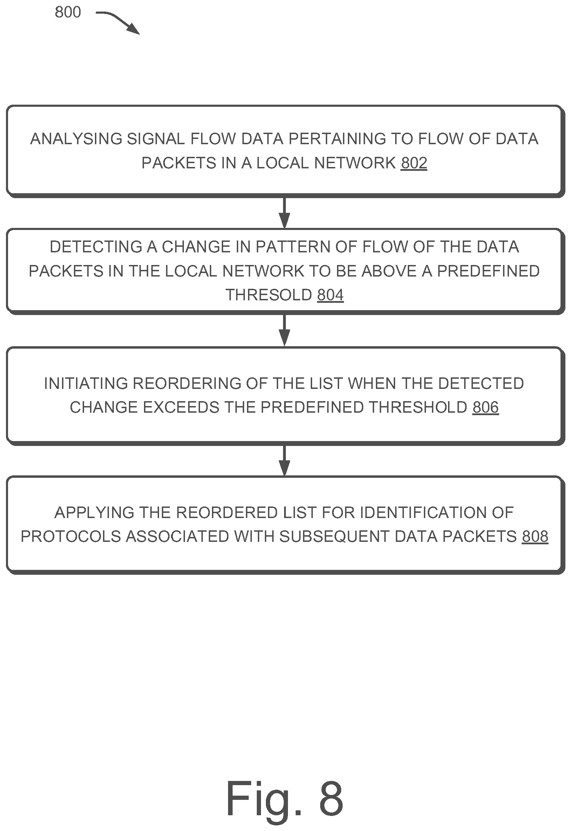

Fig. 8 illustrates a method 800 for reordering of the protocols in the list of protocols based on distribution of the protocol of the data packets in the local network 102, according to an example implementation of the present subject matter. Although the method 800 may be implemented in a variety of computer-based systems, for the ease of explanation, the present description of the example method 800 for reordering the protocols in the list based on distribution of the protocol of the data packets is provided in reference to the above-described IDS 114.

It may be understood that blocks of the method 800 may be implemented by a processor(s) or computing device(s) through any suitable hardware, non-transitory machine-readable instructions, or a combination thereof. The blocks of the method 800 may be executed based on instructions stored in a non-transitory computer-readable medium, as will be readily understood. The non-transitory computer-readable medium may include, for example, digital memories, magnetic storage media such as magnetic disks and magnetic tapes, hard drives, or optically readable digital data storage media.

The order in which the method 800 is described is not intended to be construed as a limitation, and any number of the described method blocks may be combined in any order to implement the method 800, or an alternative method.

As explained previously, there may be a change in the distribution of the protocol of the data packets in the local network 102 outside of a regular time window for reordering the list. This change may occur due to the use of a node more than usual, introduction of a new device or application in the local network 102, or a sudden shift in user behavior. Such changes may significantly alter the frequency and types of protocols being used. For example, if a company suddenly adopts a new video conferencing tool, there may be a surge in the use of specific protocols associated with that application. Similarly, if a node starts experiencing heavy traffic due to a particular event or task, it may lead to a temporary but significant change in the protocol distribution. In view of such unexpected shifts in network traffic patterns, there may be a need for detecting and adapting to changes outside the regular reordering intervals.

Accordingly, in an embodiment, at block 802, the method 800 may include analyzing signal flow data pertaining to flow of the data packets in the local network 102. To do so, in an example, the reordering module 206 may continuously monitor the network traffic, examining various attributes of the data packets such as their source, destination, protocol type, and frequency. By performing this analysis of signal flow data, the reordering module 206 may be able to determine the current state of distribution of the protocols within the local network 102.

At block 804, the method 800 may include detecting a change in pattern of flow of the data packets in the local network 102 to be above a predefined threshold. In an example, the reordering module 206 may evaluate whether the observed change in protocol distribution exceeds the predefined threshold value. In an example, this threshold may be set as a percentage change, an absolute number of occurrences, or a statistical measure such as standard deviation from the mean.

At block 806, the method 800 may include initiating a reordering of the list when the detected change exceeds the predefined threshold. In an example, the reordering module 206 may trigger the reordering process, which may involve reordering the protocols in the list based on the current frequency of occurrence. This may ensure that more frequently occurring protocols are placed at the beginning of the reordered list for faster identification.

At block 808, the method 800 may include applying the reordered list for identification of protocols associated with subsequent data packets. In an example, the reordering module 206 may update the active protocol list used by the IDS 114, ensuring that future packet identification processes use the optimized reordered list.

Accordingly, the present subject matter allows for dynamic adaptation to changing network conditions, improving the efficiency of protocol identification.

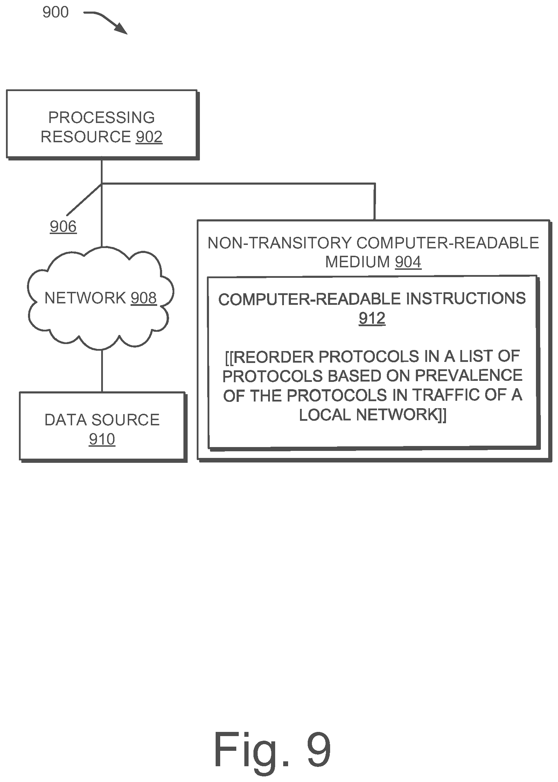

Fig. 9 illustrates a computing environment 900 for identification of protocol associated with data packets, according to an example implementation of the present subject matter. In an example implementation, the computing environment 900 may comprise a computing device, such as the above-described IDS 114. The computing environment 900 may include a processing resource 902 communicatively coupled to the non-transitory computer-readable medium 904 through a communication link 906. In an example, the processing resource 902 may be a processor of the computing device, such as the processor 302 of the IDS 114, that fetches and executes computer-readable instructions from the non-transitory computer-readable medium 904.

The non-transitory computer-readable medium 904 may be, for example, an internal memory device or an external memory device. In an example implementation, the communication link 906 may be a direct communication link, such as any memory read/write interface. In another example implementation, the communication link 906 may be an indirect communication link, such as a network interface. In such a case, the processing resource 902 may access the non-transitory computer-readable medium 904 through a network 908. The network 908 may be a single network or a combination of multiple networks and may use a variety of different communication protocols.

The processing resource 902 and the non-transitory computer-readable medium 904 may also be communicatively coupled to data sources 910. In an example implementation, the non-transitory computer-readable medium 904 may include comprises executable instructions 912 for identification of protocol associated with data packets.

In an embodiment, the instructions 912 cause the processing resource 902 to receive, from a switch 108 of a local network 102, a mirror stream of traffic data associated with nodes 106-1, 106-2, ..., and 106-N of the local network 102. In an example, the traffic data may include a plurality of data packets, each comprising an attribute indicative of a protocol associated with the respective data packet. As explained previously, the nodes 106-1, 106-2, ..., and 106-N may be computing devices, such as programmable logic controllers, servers, IoT devices, or other networked components that communicate with each other or with external systems, for example, through a public network, such as the public network 110, thereby generating the traffic data. The traffic data may include the data packets, each including attributes, such as port numbers, payload signatures, or headers, that are indicative of the protocol used to generate or transmit the respective data packet. These attributes of the data packets may be utilized by the processing resource 902 to identify the protocol associated with each data packet. Identifying the protocol enables appropriate handling and parsing of the packet content, allowing the data packets to be further inspected for detecting any threats or anomalies in the network traffic.

In an embodiment, the instructions 912 cause the processing resource 902 to access a list of protocols. As explained previously, the list of protocols may include a plurality of protocols arranged in a specific order. Each protocol in the list may be associated with one or more identification functions. Each identification function may be used to determine whether a protocol corresponding to the identification function matches the protocol associated with a respective data packet. In an example, the identification functions for the protocols in the list may include, but are not limited to, port number, magic number, and data packet structure.

In an embodiment, the instructions 912 cause the processing resource 902 to receive an indication of a start time corresponding to a configurable time window. As explained previously, the start time may indicate the beginning of a defined duration during which the protocols associated with incoming data packets are analysed for determining the prevalence of the protocols in the network traffic.

In an embodiment, the instructions 912 cause the processing resource 902 to sequentially compare the attribute of each of the plurality of data packets, received within the configurable time window, against the one or more identification functions of each protocol in the list, to identify a protocol in the list that matches the protocol associated with the respective data packets. As explained previously, identify the protocol associated with a data packet, the processing resource 902 may sequentially compare an attribute of the data packet with the identification functions corresponding to each protocol in the list. When the attribute of the data packet satisfies the criteria defined in an identification function, the associated protocol is considered to be the matching protocol.

In an embodiment, the instructions 912 cause the processing resource 902 to determine a prevalence of the protocol associated with each of the plurality of data packets in the local network 102 received over the configurable time window. In an example, the prevalence may indicate a frequency of occurrence of each protocol across the plurality of data packets. As explained previously, to determine the prevalence of the protocol associated with the data packets in the local network 102, the processing resource 902 may count occurrences of each protocol across the data packets received over the configurable time window. Further, the processing resource 902 may calculate the frequency of occurrence for each protocol by dividing the count of data packets associated with each protocol by a total number of data packets received over the configurable time window. Furthermore, the processing resource 902 may determine the prevalence of each protocol based on the calculated frequency of occurrence, wherein a higher frequency of occurrence is indicative of a higher prevalence.

In an embodiment, the instructions 912 cause the processing resource 902 to determine a stop time corresponding to expiry of the configurable time window. As explained previously, the stop time may be indicative of the end of the defined duration during which the data packets are monitored to assess the prevalence of protocols within the network traffic.

In an embodiment, the instructions 912 cause the processing resource 902 to, in response to expiry of the configurable time window, reorder the protocols in the list of protocols based on the determined prevalence, with a protocol having the highest prevalence being positioned first in the order and the remaining protocols positioned in decreasing order of prevalence. For example, if the Modbus protocol is identified to have the highest frequency of occurrence among all protocols during the configurable time window, the Modbus protocol may be positioned at a top of a reordered list of protocols. Similarly, other protocols such as the SNMP and BACnet protocols may follow in the reordered list based on their respective prevalence.

In an embodiment, the instructions 912 cause the processing resource 902 to apply the reordered list for identification of protocols associated with data packets received after the configurable time window and until a next reordering of the list. Accordingly, the reordering of the protocols in list based on the prevalence of the protocols in the network traffic may enables more efficient identification of protocols in subsequent data packets, as more frequently occurring protocols are evaluated earlier in the sequence. In an embodiment, the reordered list may be applied for determining the protocols associated with data packets received after the expiry of the configurable time window after a predetermined period.

In an embodiment, the instructions 912 cause the processing resource 902 to provide, to an AI model, such as the AI model 332, data collected corresponding to each instance of reordering of the list. In an example, the data may include timestamp information indicating a time duration for which each reordered list is applicable. The data is to form a part of a set of training data that is usable to train the AI model 332 to predict reordering of the list based on previous reordering patterns. This may allow the IDS 114 to perform reordering of the list of protocols based on data from the previous reordering events without having to do the analysing of the network traffic data. By leveraging the trained AI model 332, the IDS 114 may predict and implement optimal protocol orderings more efficiently, reducing computational overhead and improving response times to changing network conditions.

Thus, the methods, systems, and computer-readable media of the present subject matter provide for identification of the protocols associated with data packets in a manner that reduces latency and improves the accuracy of protocol detection. Although implementations of identifying the protocol associated with the data packets have been described in language specific to structural features and/or methods, it is to be understood that the appended claims are not necessarily limited to the specific features or methods described. Rather, the specific features and methods are disclosed as example implementations of determining the protocol of the data packets to enable efficient inspection and threat detection within a network.

## Claims

1. An intrusion detection system (IDS), comprising:
a processor;
a communication module, coupled to the processor, to obtain, from a switch of a local network, a mirror stream of traffic data associated with nodes of the local network, wherein the traffic data comprises a plurality of data packets, each data packet comprising an attribute indicative of a protocol associated with the data packet;
a protocol identification module, coupled to the processor, to sequentially compare, the attribute of each of the plurality of data packets, received within a configurable time window, against one or more identification functions of each of a plurality of protocols arranged in a predefined order in a list of protocols, to identify a protocol in the list that matches the protocol associated with the respective data packets; and
a reordering module, coupled to the processor, to:
determine a prevalence of the protocol associated with each of the plurality of data packets in the local network received over the configurable time window, wherein the prevalence indicates a frequency of occurrence of each protocol across the plurality of data packets; and
reorder the protocols in the list based on the determined prevalence, with a protocol having highest prevalence being positioned first in order in a reordered list and remaining protocols positioned in decreasing order of prevalence,
wherein the reordered list is to be applied for identification of protocols associated with data packets received after expiry of the configurable time.

2. The IDS of claim 1, wherein the reordered list remains applicable until a next reordering of the protocols in the reordered list.

3. The IDS of claim 1, wherein to determine the prevalence of the protocol associated with each of the plurality of data packets in the local network, the reordering module is to:
count occurrences of each protocol across the plurality of data packets received over the configurable time window;
calculate a frequency of occurrence for each protocol by dividing count of data packets associated with each protocol by a total number of data packets received over the configurable time window; and
determine the prevalence of each protocol based on the frequency of occurrence, wherein a higher frequency of occurrence being indicative of a higher prevalence.

4. The IDS of claim 1, wherein the reordering module is further to:
provide, to an artificial intelligence (AI)model, data collected corresponding to each instance of reordering of the list, the data to form a part of a set of training data usable to train the AI model to predict reordering of the list based on previous reordering patterns.

5. The IDS of claim 4, wherein the data further comprises timestamp information indicating a time duration for which each reordered list is applicable.

6. The IDS of claim 1, wherein the one or more identification functions for each protocol in the list comprise at least one of: port number, magic number, and data packet structure.

7. The IDS of claim 1, wherein the reordering module is further to:
analyse signal flow data pertaining to flow of the data packets in the local network;
detect a change in pattern of flow of the data packets in the local network to be above a predefined threshold;
initiate reordering of the list when the detected change exceeds the predefined threshold; and
apply the reordered list for identification of protocols associated with subsequent data packets.

8. A method of protocol identification, comprising:
receiving a mirror stream of traffic data from a switch of a local network, the traffic data comprising a plurality of data packets, wherein each data packet comprises an attribute indicative of a protocol associated with the data packet;
accessing a list of protocols comprising a plurality of protocols arranged in a predefined order, wherein each protocol in the list has an associated identification function;
receiving an indication of a start time corresponding to a configurable time window;
sequentially comparing the attribute of each of the plurality of data packets received subsequent to the start time against the identification function of each protocol in the list to identify a protocol in the list that matches the protocol associated with each of the respective data packets;
tracking frequency of occurrence for each identified protocol during the configurable time window;
determining a stop time corresponding to expiry of the configurable time window;
triggering reordering of the protocols in the list in response to expiry of the configurable time window, wherein the reordering is based on the frequency of occurrence for each protocol, with protocols occurring more frequently positioned earlier in a reordered list; and
publishing the reordered list for use by an intrusion detection system (IDS) for subsequent protocol identification.

9. The method of claim 8, wherein the reordered list is to be published after a predetermined period following the expiry of the configurable time window.

10. The method of claim 8, wherein the reordered list is to be used by the IDS until a next reordering of protocols in the list.

11. The method of claim 8, wherein tracking the frequency of occurrence for each identified protocol comprises:
counting occurrences of each protocol across the plurality of data packets received over the configurable time window; and
calculating the frequency of occurrence for each protocol by dividing count of data packets associated with each protocol by a total number of data packets received over the configurable time window.

12. The method of claim 8, further comprising:
providing, to an artificial intelligence (AI)model, data collected corresponding to each instance of reordering of the list, the data to form a part of a set of training data usable to train the AI model to predict a sequence for reordering of the protocols in the local network.

13. The method of claim 12, wherein the data further comprises timestamp information indicating a time duration for which each reordered list is applicable.

14. The method of claim 8, wherein the identification function for each protocol in the list comprises at least one of: port number, magic number, and data packet structure.

15. A non-transitory computer-readable medium (CRM) comprising instructions that, when executed by a processing resource, cause the processing resource to:
receive, from a switch of a local network, a mirror stream of traffic data associated with nodes of the local network, wherein the traffic data comprises a plurality of data packets, each comprising an attribute indicative of a protocol associated with the respective data packets;
access a list of protocols comprising a plurality of protocols arranged in an order, wherein each protocol in the list is associated with one or more identification functions, each identification function to be used to determine whether a protocol corresponding to the identification function matches the protocol associated with the respective data packets;
receive an indication of a start time corresponding to a configurable time window;
sequentially compare the attribute of each of the plurality of data packets, received within the configurable time window, against the one or more identification functions of each protocol in the list, to identify a protocol in the list that matches the protocol associated with the respective data packets;
determine a prevalence of the protocol associated with each of the plurality of data packets in the local network received over the configurable time window, wherein the prevalence indicates a frequency of occurrence of each protocol across the plurality of data packets;
determine a stop time corresponding to expiry of the configurable time window;
in response to expiry of the configurable time window, reorder the protocols in the list based on the determined prevalence, with a protocol having highest prevalence being positioned first in order in a reordered list and remaining protocols positioned in decreasing order of prevalence; and
apply the reordered list for identification of protocols associated with data packets received after the configurable time window and until a next reordering of the list.
